# EUROPEAN PATENT SPECIFICATION

(11) **EP 0 631 997 B1**
(45) Date of publication and mention of the grant of the patent: **29.12.1997**
(21) Application number: 94304801.7
(22) Date of filing: 30.06.1994
(51) Int. Cl.: C04B 35/584, C04B 35/64

(54) **Silicon nitride based sintered body and method for producing the same**
Gesinterter Formkörper auf der Basis von Siliciumnitrid und Verfahren zu dessen Herstellung
Corps fritté à base de nitrure de silicium et sa méthode de préparation

(30) Priority: 30.06.1993 JP 187348/93; 13.06.1994 JP 155223/94
(43) Date of publication of application: 04.01.1995
(73) Proprietor: SUMITOMO ELECTRIC INDUSTRIES, LTD., Osaka-shi, Osaka 541 (JP)
(72) Inventor: Matsuura, Takashi, c/o Itami Works of, Itami-shi, Hyogo (JP); Yamakawa, Akira, c/o Itami Works of, Itami-shi, Hyogo (JP); Miyake, Masaya, c/o Itami Works of, Itami-shi, Hyogo (JP)
(74) Representative: Warren, Anthony Robert

(56) References cited:
- EP-A- 0 270 233
- WO-A-91/05747
- DE-A- 4 126 510
- US-A- 5 223 186
- ADVANCED CERAMIC MATERIALS, vol.3, no.1, 1988, WESTERVILLE, OHIO, USA pages 77 - 79 XIA PAN & AL. 'Plasma sintering of ultrafine amorphous Si3N4'
- JOURNAL OF THE EUROPEEN CERAMIC SOCIETY, vol.5, no.4, 1989, BARKING, ESSEX, GB pages 209 - 217 KULIG & AL. 'Sol-gel coating of silicon nitride with Mg-Al oxide sintering aid'
- PATENT ABSTRACTS OF JAPAN vol. 017, no. 102 (C-1031) 2 March 1993 & JP-A-04 292 466 (NGK INSULATORS LTD) 16 October 1992
- CERAMIC ENGINEERING AND SCIENCE PROCEEDINGS, vol.12, no.9/10, 1991, WESTERVILLE, OHIO, USA pages 1981 - 1992 TIEGS & AL. 'Microwave sintering of silicon nitride'
- 'Silicon nitride ceramics. Scientific and technological advances' , MATERIALS RESEARCH SOCIETY SYMPOSIUM PROCEEDINGS VOL. 287 , PITTSBURG, PENNSYLVANIA Page 289-293 "Microstructural characterisation of microwave sintered silicon nitride ceramics" * the whole document *
- JOURNAL OF THE EUROPEEN CERAMIC SOCIETY, vol.5, no.5, May 1989, BARKING, ESSEX, GB pages 311 - 319 KIM JI-SOON & AL. 'Sintering of Si3N4 with Y2O3 and Al2O3 added by coprecipitation'

## Description

The present invention relates to a silicon nitride based sintered body having excellent mechanical properties in middle and low temperature ranges from room temperature to 1100°C as structural ceramic materials to be used for automobile parts, wear-resistant tools, and the like. The invention also relates to methods for producing the same.

Silicon nitride is a material well balanced in strength, fracture toughness, corrosion resistance, wear resistance, thermal shock resistance, oxidation resistance, and the like, so that it is used over a wide range of fields such as cutting tools and engine parts. In particular, it has recently been drawing an industrial attention as a structural material of automobile engines, gas turbines, and the like. However, to apply silicon nitride based sintered bodies to those fields which demand high reliability to materials such as in automobile engines, it is essential to further improve their fracture toughness so as to overcome their brittleness, and to improve their strength at the same time.

For example, as disclosed in Japanese Patent Laid-Open Publication No. SHO 61-91065 and Japanese Patent Laid-Open Publication No. HEI 2-44066, there have been proposed silicon nitride single-phase materials that show improved mechanical characteristics such as strength by generating a combination of crystal phases, or a composite crystal phase, of equiaxial particulate α'-sialon (general formula: Mₓ(Si, Al)₁₂(O, N)₁₆, wherein M represents Mg, Ca, Li, and rare-earth elements) and columnar β'-sialon (including β type silicon nitrides). However, as apparent from their embodiments, the methods for producing a sintered body that show a strength characteristic of their resulting sintered bodies stably exceeding 100 kg/mm² by flexural strength are in all cases by the hot press process, such that high strength characteristic has not yet been attained stably from the industrial point of view.

Also, there have been proposed composite materials, such as disclosed in Japanese Patent Laid-Open Publication No. HEI 4-202059, in which 1 to 500 nm fine particles are dispersed in silicon nitride and sialon having a longer-axis diameter of 0.05 to 3 µm and an aspect ratio of 3 to 20. The composite materials indeed show a strength of 167 kg/mm² at a maximum in the embodiments, but may incur deterioration in strength because they may contain coarse silicon nitride. Further, the composite materials only have a Weibull coefficient of 9 or so. Thus, high strength characteristic could not be attained with stability, also in this case.

Yet further, as disclosed in Japanese Patent Laid-Open Publication No. HEI 4-295056, there has been proposed a sintered body in which different types of particles are dispersed in a grain boundary phase of silicon nitride having a columnar structure. This sintered body has maximum particle sizes as much as 2 µm to 3.5 µm in shorter-axis diameter and 10 µm to 14 µm in longer-axis diameter, such that the matrix itself can make a fracture source. The strength in its embodiment is 158 kg/mm² at a maximum, and the baking temperature is above 1800°C. Thus, the sintered body could not be sufficient in terms of productivity and cost.

In the prior art attempts to improve the strength and toughness of silicon nitride based sintered bodies, as described above, it has been greatly difficult to improve the strength and the fracture toughness at the same time, due to the fact that enhancing the strength by forming the fine grained structure would result in lowered fracture toughness and, conversely, enhancing the fracture toughness by presenting columnar crystals through addition of whiskers or grain growth of silicon nitride would incur deterioration in strength.

Wen Xia Pan et al; Plasma Sintering of ultrafine amorphous Si N ; Advanced Ceramic Materials 3 (1988), No.1, p.77-79 relates to plasma sintering of ultrafine amorphous silicon nitride in the absence of additives and succeeds in suppressing the weight loss during firing obtaining a fine, homogenous structure. It suggests to sinter the specimens at 1200°C to 1900°C and in an example sintering at 1900°C for 60 s was used.

Accordingly, in view of the above conventional problems, the object of the present invention is to provide a silicon nitride based sintered body which is composed of uniform, very fine crystal grains and which is improved in bending strength and fracture toughness at the same time, and moreover to provide a method for producing the same.

To achieve the above object, the silicon nitride based sintered body according to the present invention comprises at least one of α,β-Si₃N₄ and α,β-sialon whose longer-axis diameter is not more than 200 nm, more desirably not more than 50 nm.

Further, the method for producing a silicon nitride based sintered body according to the present invention comprises the step of sintering a crystalline silicon nitride powder composed of crystal grains whose longer-axis diameter is not more than 200 nm at a temperature of 1200°C to 1900°C by a spark plasma or microwave heat sintering process, wherein if the sintering temperature is in the range from 1400°C to 1900°C the product of sintering temperature (°C) and sintering time (sec) is below 600,000°C.sec.

The silicon nitride powder is desirably a crystalline silicon nitride powder composed of crystal grains whose longer-axis diameter is not more than 200 nm or an amorphous silicon nitride powder. Also, the method for producing a crystalline silicon nitride powder is desirably mechanical alloying process. The method of sintering is desirably spark plasma sintering, microwave sintering, ultra-high pressure sintering, or the like.

The silicon nitride of the present invention, as a matrix phase, is composed of crystal grains whose longer-axis diameter is not more than 200 nm. Attaining such fine, uniform structure as has not been attained hitherto makes it possible to attain a high strength that has not been expected so far.

Further, in the present invention, unlike the conventional counterpart, refining the grain size leads to enhancement in fracture toughness. This could be attributed to the fact that while the conventional sintered body whose longer-axis diameter is more than 200 nm would result in brittle fracture of the material, reducing the longer-axis diameter to not more than 200 nm would develop a ductile state of ceramics due to the grain boundary slide phenomenon or the like.

As a result of these, the sintered body of the present invention shows high bending strengths and high toughnesses more than a bending strength of 500 kg/mm² and a fracture toughness of 15 MPa·m^{½} at temperatures lower than 1100°C.

One method for producing the sintered body of the present invention may be the step of sintering silicon nitride powder at a temperature of 1200°C to 1400°C. Temperatures lower than 1200°C could not allow the sintering to progress, while temperatures exceeding 1400°C would cause grain growth to progress such that the longer-axis diameter exceeds 200 nm.

As another method, it is desirable that the product of sintering temperature (°C) and sintering time (sec) is below 600000 (°C·sec) in a temperature range of 1400°C to 1900°C. The products below 600000 (°C·sec) could not allow the grain growth to progress even at temperatures above 1400°C, so that a longer-axis diameter not more than 200 nm can be obtained. Also, temperatures exceeding 1900°C would make it impossible to suppress grain growth even with short time sintering, so that temperatures below 1900°C are desirable.

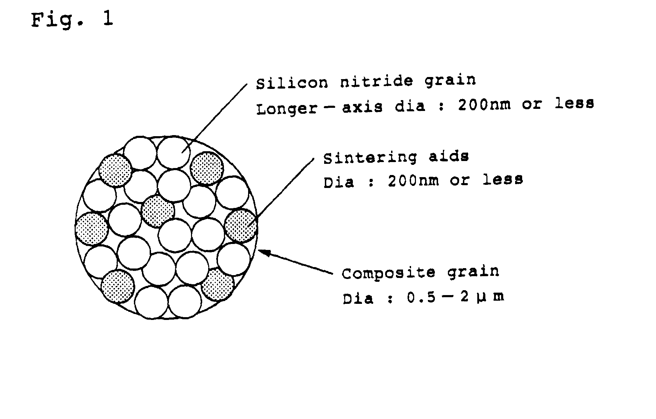

The silicon nitride material powder to be used is not particularly limited, but desirably a crystalline silicon nitride powder composed of crystal grains whose longer-axis diameter is not more than 200 nm with a view to improving the sinterability as much as possible. As this material powder, an ultrafine powder whose mean diameter is not more than 200 nm and which is fabricated by the CVD process or the like may be used, but in general the finer the powder becomes, the more it tends to aggregate and becomes difficult to treat. Therefore, as the material powder to be used, it is desirable that the diameter is in the range of 0.5 to 2 µm and that the powder is composed of sintering aids and crystal grains of silicon nitride whose longer-axis diameter is not more than 200 nm, as shown in Fig. 1. The method for fabricating such a powder is desirably a mechanical alloying process in which powder is milled at high acceleration and thereby alloyed. Although the mechanical alloying has conventionally been considered as a phenomenon that can occur in metals, a phenomenon has been found that a plurality of ceramics grains are refined and simultaneously fused by milling at higher acceleration than ever so as to be formed into a powder.

As the silicon nitride material powder, it is also desirable to use amorphous silicon nitride powder. The reason is that amorphous powder will be divided into fine crystal grains when crystallized. As the method for reducing the grain size of the amorphous powder in its crystallization, it is further desirable that a fine oxide whose mean particle size is not more than 100 nm is used as sintering aids in addition to the above-described method. Although the reason is not well known, it may be that when amorphous powder is divided into fine crystal grains, the fine oxide acts like a crystal nucleus. To add such fine sintering aids, the conventional method may be used where fine sintering aids whose mean particle size is not more than 100 nm is mixed with amorphous powder by a ball mill or the like. However, generally, the finer the powder becomes, the more it tends to aggregate and the more difficult to uniformly mix. Accordingly, it is preferable to use the sol-gel process in which an oxide is synthesized by hydrolyzing a solution having metal alcoxide or the like dissolved in an organic solvent, so that the amorphous powder and the oxide sintering aids will be uniformly mixed.

Further, it is desirable to use spark plasma sintering or microwave sintering as the sintering method for the above processes. The spark plasma sintering is preferred since the oxidized layer on the particle surface is removed by spark plasma during the sintering process so that particles are activated while electric-field diffusion is developed among grains by spark, whereby sintering and crystallization are carried out at low temperatures. Similarly, the microwave sintering is also preferred since sintering progresses from the interior of the sintered body, whereby sintering and crystallization are carried out at low temperatures.

Reference will now be made to the accompanying drawings, in which:-

Fig. 1 is a schematic view of a composite powder fabricated by mechanical alloying.

### (Example 1)

A silicon nitride powder whose mean particle size is 0.5 µm, with sintering aids added thereto, was sealed with Ar gas in a metal pot (SUS304, inner diameter: 100 mmφ) by a ZrO₂ ball mill and then subjected to mechanical alloying for one hour at room temperature by a planetary ball mill. The number of self-rotations of the mill was 500 rpm and its number of orbit-revolutions was 200 rpm. When the powder was evaluated by a transmission electron microscope, its particle diameter was 1 µm and the mean longer-axis diameter of silicon nitride crystal grains in the powder was 10 nm. The sintering aids were 0.2 µm in mean particle size and weighted as 2 wt% of Al₂O₃, 1 wt% of MgO, and 5 wt% of Y₂O₃, by weight per cent relative to 100 of silicon nitride powder.

Next, a mixed powder was pressed, and sintered under conditions as shown in Table 1. The resulting sintered body was cut into bending strength test pieces of 3 × 4 × 40 mm, and finished with cutting work by a #800 diamond grindstone. Thereafter the test pieces were checked for three-point bending strength in accordance with JIS R 1601. Further, relative density, fracture toughness value K_{IC}, and mean longer-axis diameter of each sintered body were determined. Crystal grains were lapping-processed by one arbitrary cross section of the sintered bodies and then etching-processed for 30 min. with a 80°C etching solution (HF : HNO = 2 : 1). Thereafter their mean grain size was observed by a scanning electron microscope at a magnification of 100000. The results are shown in Table 2.

Also, as a comparative example, a sample was fabricated by sintering the powder not by plasma sintering but by hot-press sintering (hereinafter abbreviated as H. P. ) (No. 4). This sample was also evaluated.

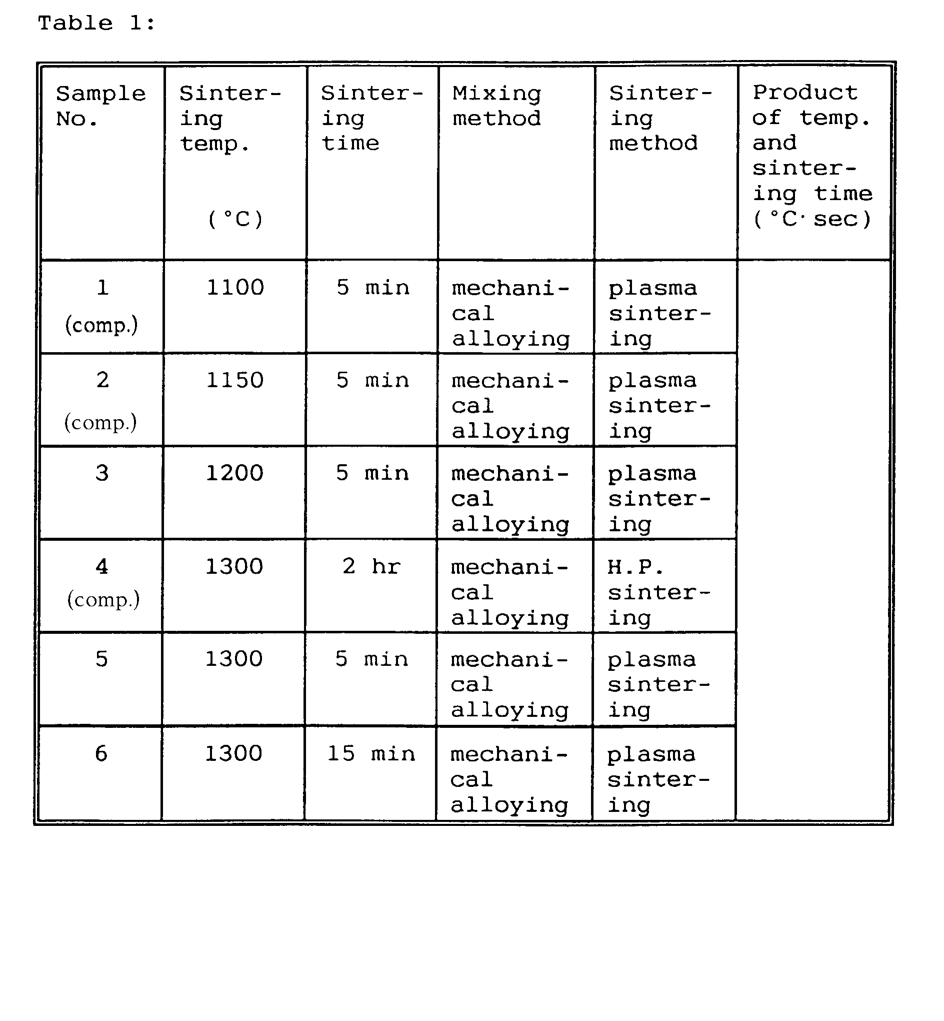

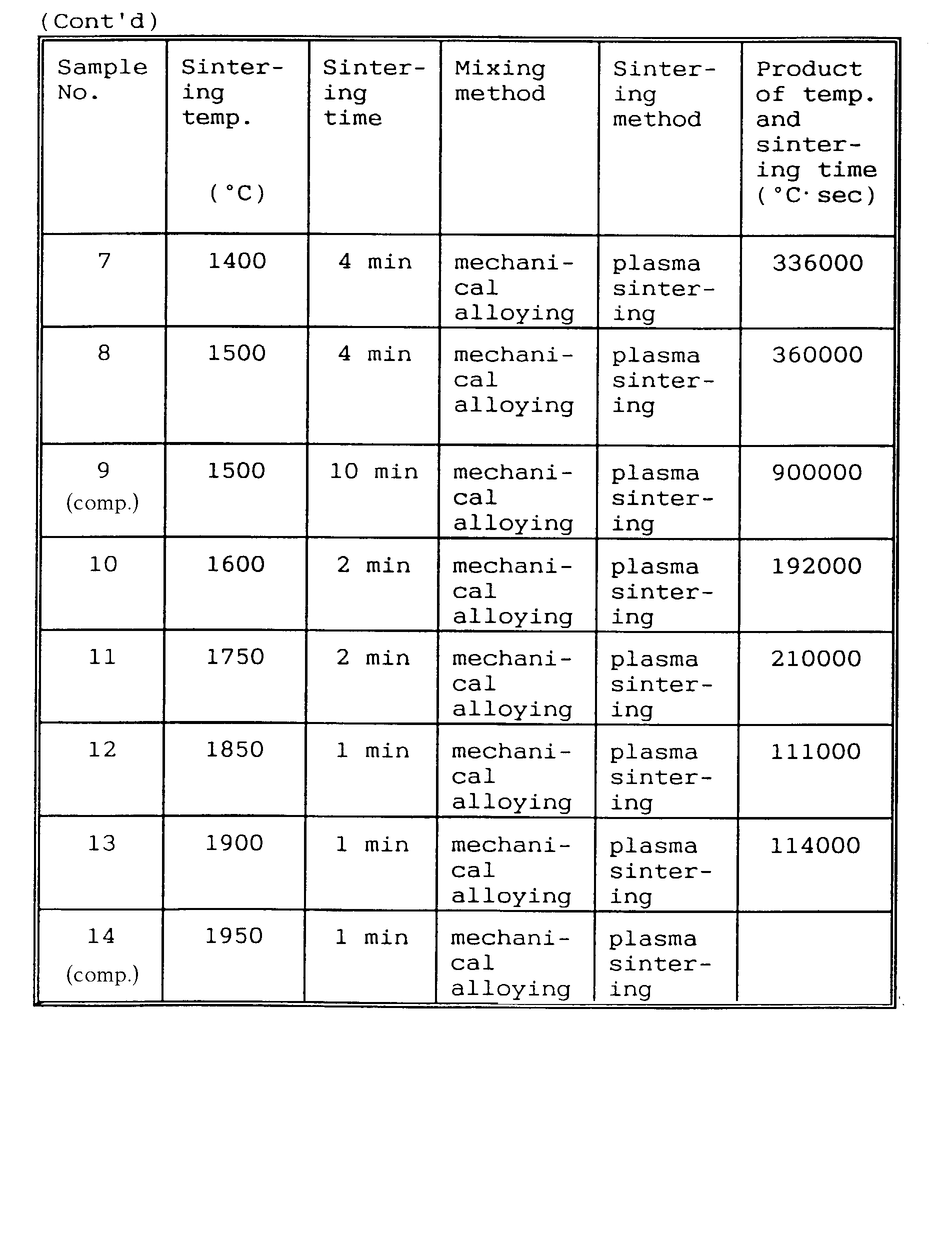

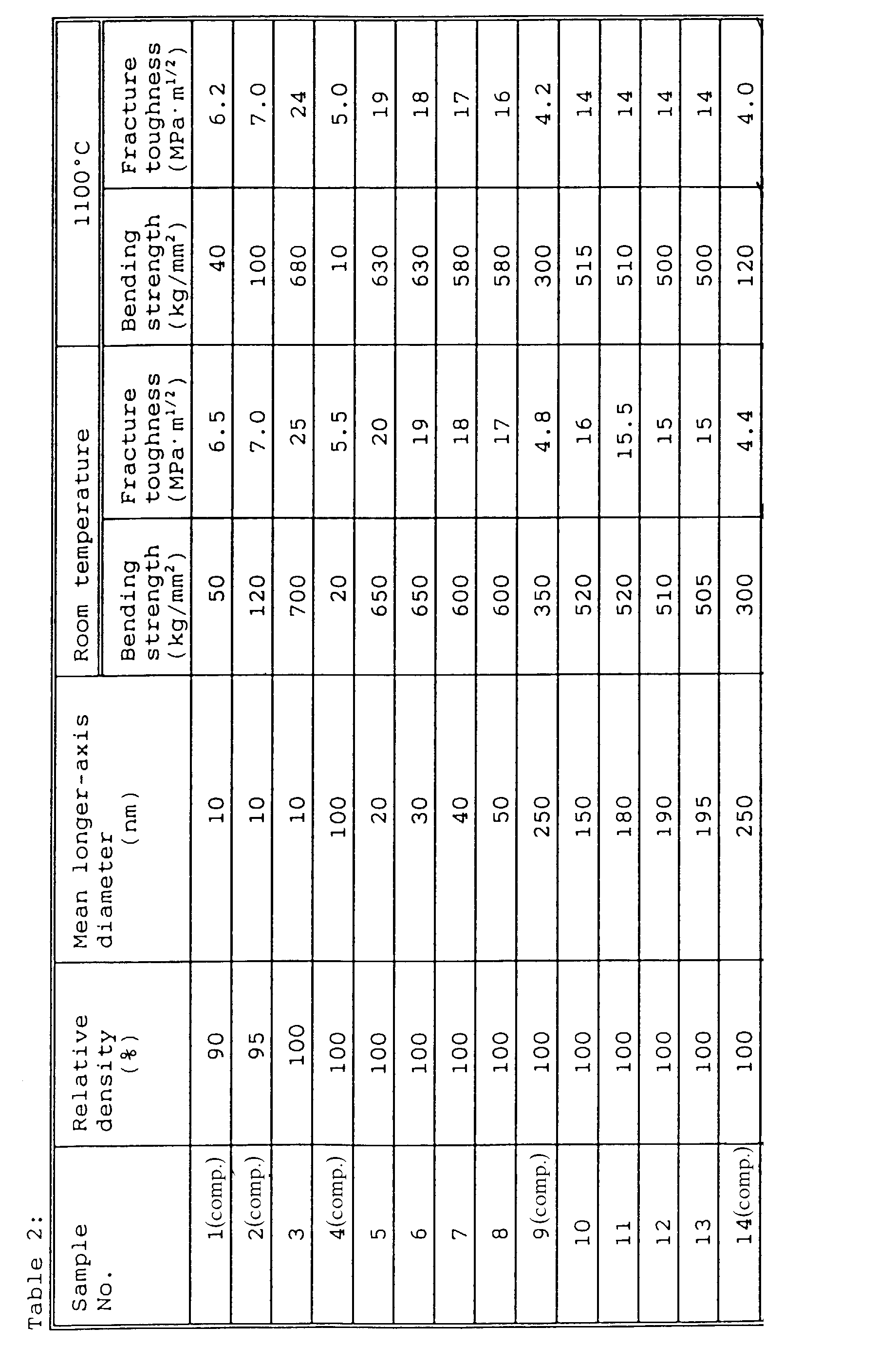

From the results of Table 2, it can be understood that the samples of the embodiments of the present invention have bending strengths and fracture toughnesses equivalent to or more than those of the conventional comparative example (No. 4) by H. P. sintering in either case of room temperature and 1100°C. In particular, samples of 50 nm or less particle sizes (Nos. 5, 6, 7, 8) can be found to have been improved substantially in bending strength and fracture toughness.

The other comparative examples (Nos. 1, 2, 9, 14) are found to have substantially deteriorated in bending strength and fracture toughness due to improper sintering temperature or time. Temperatures higher than 1900°C caused occurrence of grain growth, with deteriorated characteristics.

Next, with the time of mechanical alloying reduced to 10 min, a composite powder whose powder diameter was 2 µm and whose mean longer-axis grain diameter of fine crystal grains in powder was 300 nm was prepared and used. Then the mean longer-axis diameter of sintered body was only 300 nm and the bending strength was as low as 200 kg/mm² even under sintering conditions of 1300°C × 5 min.

### (Example 2)

An amorphous silicon nitride powder whose mean diameter was 0.5 µm, with sintering aids added thereto at the same ratio as in Example 1, wet mixed for 100 hours by a nylon ball mill. Then the mixed powder was pressed and sintered each for 7 min. under conditions as shown in Table 3. As in Example 1, characteristics of the resulting sintered bodies are shown in Table 4.

**Table 3:**

| Sample No. | Sintering temperature (°C) | Sintering method | Product of temperature and sintering time (°C·sec) |
|---|---|---|---|
| 17 (comp.) | 1100 | plasma sintering | |
| 18 (comp.) | 1150 | plasma sintering | |
| 19 | 1200 | plasma sintering | |
| 20 | 1300 | plasma sintering | |
| 21 (comp.) | 1300 | H.P. sintering | |
| 22 | 1400 | plasma sintering | 588000 |
| 23 (comp.) | 1500 | plasma sintering | 630000 |

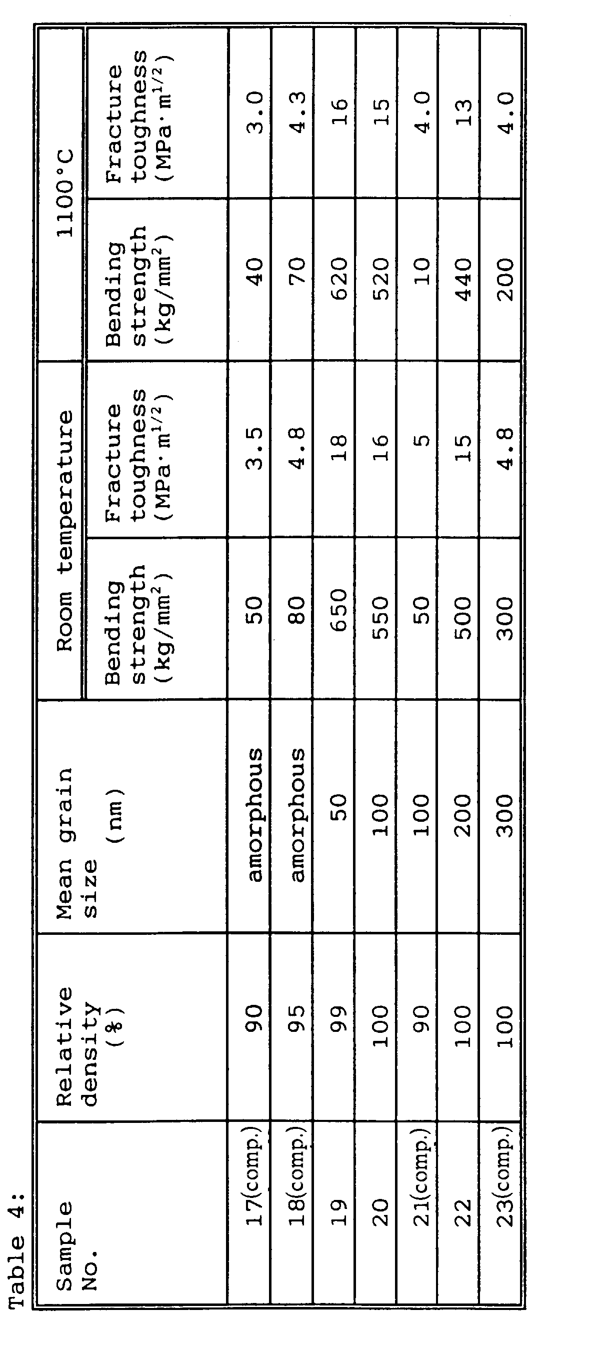

From the results of Table 4, it can be understood that the samples of the embodiments of the present invention have bending strengths and fracture toughnesses higher than those of the conventional comparative example (No. 21) sintered by H. P. The other comparative examples (Nos. 17, 18, 23) are found to have been insufficiently crystallized or substantially deteriorated in bending strength and fracture toughness due to improper sintering temperature.

### (Example 3)

To an amorphous silicon nitride powder whose mean particle size was 0.5 µm, metal alcoxides of yttrium, aluminium, and magnesium were added to 5 wt%, 2 wt%, and 1 wt%, respectively, by conversion to oxides, and ultrasonically mixed by adding ethanol to them. The mixed solutions were hydrolyzed by adding ammonium and water thereto, whereby fine particles of Y₂O₃, Al₂O₃, and MgO were synthesized. Then the mixed solutions were dried and thus mixed powders of the amorphous powder and the oxides were prepared. When the oxides were evaluated for particle size by TEM (Transmission Electron Microscope), the results were 50 nm for Y₂O₃, 80 nm for Al₂O₃, and 30 nm for MgO.

Next, the mixed powders were pressed and sintered under conditions as shown in Table 5 each for 7 min. As in Example 1, characteristics of the resulting sintered bodies are shown in Table 6.

**Table 5:**

| Sample No. | Sintering temperature (°C) | Sintering method | Product of temperature and sintering time (°C·sec) |
|---|---|---|---|
| 24 (comp.) | 1100 | plasma sintering | |
| 25 (comp.) | 1150 | plasma sintering | |
| 26 | 1200 | plasma sintering | |
| 27 | 1300 | plasma sintering | |
| 28 (comp.) | 1300 | H.P. sintering | |
| 29 | 1400 | plasma sintering | 588000 |
| 30 (comp.) | 1500 | plasma sintering | 630000 |

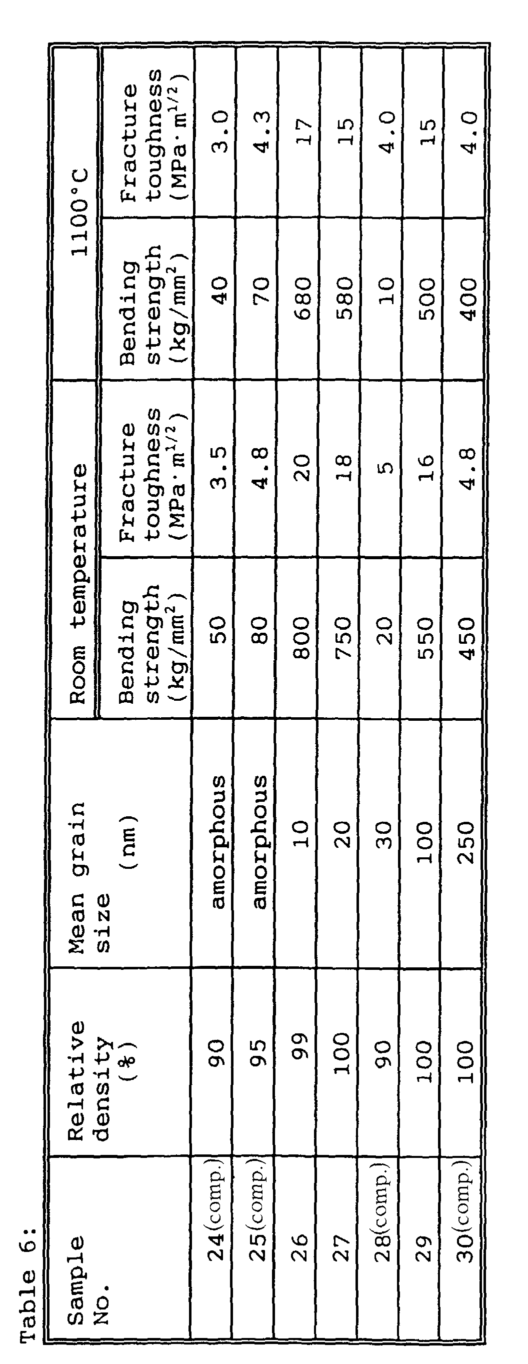

From the results of Table 6, it can be understood that the resulting sintered bodies are finer in grain size and improved in bending strength and fracture toughness, as compared with the results of Table 4 in which oxide sintering aids with mean particle size 0.2 µm was used. Also, samples of Nos. 24 and 25 had not been crystallized due to low sintering temperatures, with the result of substantially low strengths.

### (Example 4)

The powders fabricated in Example 1 were plasma-sintered at a sintering temperature of 1300°C for 5 min. From these plasma-sintered samples, 20 test pieces were cut out, and evaluated for grain size, bending strength, and fracture toughness. Then results with remarkably high reliability were obtained as a mean grain size of 20 nm, a mean bending strength of 650 kg/mm², a Weibull coefficient of 25, and a mean toughness of 20 MPa·m^{½}.

### (Example 5)

The compacts fabricated in Example 1 were sintered for 7 min. under conditions as shown in Table 7. Microwave sintering conditions other than sintering temperature and sintering time were a nitrogen gas pressure of 1 atm and a microwave frequency of 20 GHz. On the resulting sintered body samples, evaluation was made in the same way as in Example 1. The results are shown in Table 8.

**Table 7:**

| Sample No. | Sintering temperature (°C) | Product of temperature and sintering time (°C·sec) |
|---|---|---|
| 31 (comp.) | 1100 | |
| 32 (comp.) | 1150 | |
| 33 | 1200 | |
| 34 | 1300 | |
| 35 | 1400 | 588000 |
| 36 (comp.) | 1500 | 630000 |

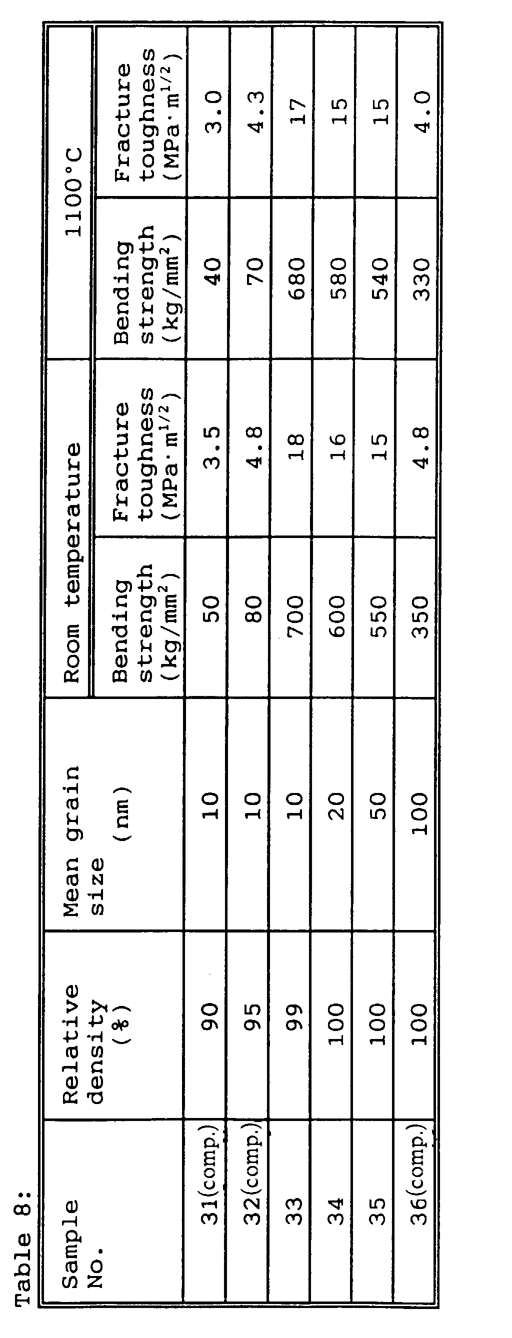

From the above results, it can be understood that the samples other than those of Nos. 31, 32, and 35 whose sintering temperature and sintering time were improper have remarkably superior bending strength and fracture toughness.

According to the present invention, silicon nitride ceramics can be offered which are superior in both bending strength and fracture toughness. The silicon nitride ceramics are very useful for a wide range of applications from automobile engine members that demand high reliability to structural ceramic materials for wear-resistant tools and the like.

## Claims

1. A silicon nitride based sintered body comprising silicon nitride and/or sialon crystals whose longer-axis diameter is not more than 200 nm.

2. A silicon nitride based sintered body according to claim 1 wherein the longer-axis diameter of said crystals is not more than 50 nm.

3. A method for producing a silicon nitride based sintered body according to claim 1 or claim 2, comprising the step of sintering a crystalline silicon nitride powder composed of crystal grains whose longer-axis diameter is not more than 200 nm at a temperature of 1200°C to 1900°C by a spark plasma or microwave heat sintering process, wherein if the sintering temperature is in the range from 1400°C to 1900°C the product of sintering temperature (°C) and sintering time (sec) is below 600,000°C.sec.

4. A method according to claim 3, wherein said silicon nitride powder is fabricated by a mechanical alloying process.

5. A method according to claim 3, wherein said crystalline powder is produced from amorphous silicon nitride powder.

6. A method according to claim 5, wherein fine oxide particles whose particle size is not more than 100 nm are used as sintering aids.

7. A method according to claim 6, wherein said sintering aids are added by a sol-gel process.

8. A method for producing a silicon nitride-based sintered body by sintering at a temperature of 1200 to 1900°C a silicon nitride powder having a longer-axis grain diameter of not more than 200 nm, wherein a sintering aid is incorporated into the mixture to be sintered either
(a) by mixing the sintering aid with said silicon nitride powder prior to sintering or
(b) by subjecting silicon nitride and the sintering aid together to mechanical alloying to produce composite powder particles comprising the sintering aid and said silicon nitride crystals having the longer-axis grain diameter of not more than 200 nm,
and wherein if the sintering temperature is in the range from 1400 to 1900°C the product of sintering temperature (°C) and sintering time (sec) is below 600,000°C.sec.

9. A method for producing a silicon nitride-based sintered body which comprises mixing amorphous silicon nitride powder with a sintering aid comprising fine oxide particles with a particle size of not more than 100 nm and sintering the mixture at a temperature of 1200 to 1900°C, wherein if the sintering temperature is in the range from 1400 to 1900°C the product of sintering temperature (°C) and sintering time (sec) is below 600,000°C. sec.

10. A method according to claim 8 or claim 9 wherein said sintering aid is added by a sol-gel process.

11. A process according to any one of claims 8 to 10 wherein the sintering is carried out by a spark plasma process.

12. A process according to any one of claims 8 to 10 wherein the sintering is carried out by a microwave heat sintering process.

## Patentansprüche

1. Gesinterter Formkörper auf der Basis von Siliziumnitrid, umfassend Siliziumnitrid- und/oder Sialonkristalle, deren Durchmesser auf der längeren Achse nicht mehr als 200 nm beträgt.

2. Gesinterter Formkörper auf der Basis von Siliziumnitrid nach Anspruch 1, wobei der Durchmesser der Kristalle auf der längeren Achse nicht mehr als 50 nm beträgt.

3. Verfahren zur Herstellung eines gesinterten Formkörpers auf der Basis von Siliziumnitrid nach Anspruch 1 oder Anspruch 2, umfassend den Schritt des Sintems eines kristallinen Siliziumnitridpulvers, bestehend aus Kristallkörnern, deren Durchmesser auf der längeren Achse nicht mehr als 200 nm beträgt, bei einer Temperatur von 1200°C bis 1900°C durch ein Funkenplasma- oder Mikrowellenwärmesinterverfahren, wobei, wenn die Sintertemperatur im Bereich von 1400°C bis 1900°C liegt, das Produkt von Sintertemperatur (°C) und Sinterdauer (Sek) unter 600000°C.Sek liegt.

4. Verfahren nach Anspruch 3, wobei das Siliziumnitridpulver durch ein mechanisches Legierungsverfahren hergestellt wird.

5. Verfahren nach Anspruch 3, wobei das kristalline Pulver aus amorphem Siliziumnitridpulver erzeugt wird.

6. Verfahren nach Anspruch 5, wobei feine Oxidpartikel, deren Partikelgröße nicht mehr als 100 nm beträgt, als Sinterhilfen verwendet werden.

7. Verfahren nach Anspruch 6, wobei die Sinterhilfen durch ein Sol-Gel-Verfahren hinzugefügt werden.

8. Verfahren zur Herstellung eines gesinterten Formkörpers auf der Basis von Siliziumnitrid durch Sintern eines Siliziumnitridpulvers dessen Durchmesser auf der längeren Achse nicht mehr als 200 nm beträgt, bei einer Temperatur von 1200 bis 1900 C, wobei eine Sinterhilfe in die zu sinternde Mischung eingebracht wird, entweder
(a) durch Vermischen der Sinterhilfe mit dem Siliziumnitridpulver vor dem Sintern oder
(b) durch gemeinsames Unterwerfen von Siliziumnitrid und der Sinterhilfe einem mechanischen Legierungsverfahren zur Erzeugung von Verbundpulverpartikeln, welche die Sinterhilfe und die Siliziumnitridkristalle, deren Durchmesser auf der längeren Achse nicht mehr als 200 nm beträgt, umfassen,
und wobei, wenn die Sintertemperatur im Bereich von 1400 C bis 1900 C liegt, das Produkt von Sintertemperatur (C) und Sinterdauer (Sek) unter 600000 C.Sek liegt.

9. Verfahren zur Herstellung eines gesinterten Formkörpers auf der Basis von Siliziumnitrid, welches das Vermischen von amorphem Siliziumnitridpulver mit einer Sinterhilfe, die feine Oxidpartikel mit einer Partikelgröße von nicht mehr als 100 nm umfaßt, und das Sintem der Mischung bei einer Temperatur von 1200 C bis 1900 C umfaßt, wobei, wenn die Sintertemperatur im Bereich von 1400 C bis 1900 C liegt, das Produkt von Sintertemperatur ( C) und Sinterdauer (Sek) unter 600000 C.Sek liegt.

10. Verfahren nach Anspruch 8 oder Anspruch 9, wobei die Sinterhilfe durch ein Sol-Gel-Verfahren hinzugefügt wird.

11. Verfahren nach einem der Ansprüche 8 bis 10, wobei das Sintern durch ein Funkenplasmaverfahren ausgeführt wird.

12. Verfahren nach einem der Ansprüche 8 bis 10, wobei das Sintern durch ein Mikrowellenwärmesinterverfahren ausgeführt wird.

## Revendications

1. Corps fritté à base de nitrure de silicium comprenant des cristaux de nitrure de silicium et/ou de sialon dont le diamètre sur l'axe le plus long n'est pas supérieur à 200 nm.

2. Corps fritté à base de nitrure de silicium selon la revendication 1, dans lequel le diamètre sur l'axe le plus long desdits cristaux n'est pas supérieur à 50 nm.

3. Procédé de production d'un corps fritté à base de nitrure de silicium selon la revendication 1 ou 2, comprenant l'étape de fritter une poudre de nitrure de silicium cristalline composée de grains de cristal dont le diamètre sur l'axe le plus long n'est pas supérieur à 200 nm à une température de 1 200°C à 1 900°C par un procédé de frittage thermique à hyper-fréquence ou au plasma à étincelle, dans lequel si la température de frittage est dans le domaine de 1 400°C à 1 900°C, le produit de la température de frittage (°C) et du temps de frittage (seconde) est inférieur à 600 000°C.sec.

4. Procédé selon la revendication 3, dans lequel ladite poudre de nitrure de silicium est fabriquée par un procédé d'alliage mécanique.

5. Procédé selon la revendication 3, dans lequel ladite poudre cristalline est produite à partir de poudre de nitrure de silicium amorphe.

6. Procédé selon la revendication 5, dans lequel de fines particules d'oxyde dont la taille de particules n'est pas supérieure à 100 nm sont utilisées en tant qu'aides au frittage.

7. Procédé selon la revendication 6, dans lequel lesdites aides au frittage sont ajoutées par un procédé sol-gel.

8. Procédé pour produire un corps fritté à base de nitrure de silicium en frittant à une température de 1 200°C à 1 900°C une poudre de nitrure de silicium ayant un diamètre de grain sur l'axe le plus long pas supérieur à 200 nm, dans lequel une aide au frittage est incorporée dans le mélange à fritter soit
a) en mélangeant l'aide au frittage avec la poudre de nitrure de silicium avant de fritter, soit
(b) en soumettant le nitrure de silicium et l'aide au frittage ensemble à un alliage mécanique pour produire des particules de poudre composites comprenant l'aide au frittage et lesdits cristaux de nitrure de silicium ayant le diamètre de grain sur l'axe le plus long pas supérieur à 200 nm,
et dans lequel si la température de frittage est dans le domaine de 1 400°c à 1 900°C, le produit de la température de frittage (°C) et du temps de frittage (seconde) est inférieur à 600 000°C.sec.

9. Procédé pour produire un corps fritté à base de nitrure de silicium qui comprend de mélanger de la poudre de nitrure de silicium amorphe avec une aide au frittage comprenant de fines particules d'oxyde ayant une taille de particules de pas plus de 100 nm et de fritter le mélange à une température de 1 200°C à 1 900°C, dans lequel si la température de frittage est dans le domaine de 1 400°C à 1 900°C, le produit de la température de frittage (°C) et du temps de frittage (seconde) est inférieur à 600 000°C.sec.

10. Procédé selon la revendication 8 ou la revendication 9, dans lequel ladite aide au frittage est ajoutée par un procédé sol-gel.

11. Procédé selon l'une quelconque des revendications 8 à 10, dans lequel le frittage est effectué par un procédé au plasma à étincelle.

12. Procédé selon l'une quelconque des revendications 8 à 10, dans lequel le frittage est effectué par un procédé de frittage thermique à hyper-fréquence.
